# EUROPÄISCHE PATENTSCHRIFT

(11) **EP 3 767 272 B1**
(45) Veröffentlichungstag und Bekanntmachung des Hinweises auf die Patenterteilung: **20.09.2023**
(21) Anmeldenummer: 20186081.4
(22) Anmeldetag: 15.07.2020
(51) Int. Cl.: G01N 1/06

(54) **MIKROTOM UND VERFAHREN ZUM BETRIEB EINES MIKROTOMS**
MICROTOME AND METHOD OF OPERATING A MICROTOME
MICROTOME ET PROCÉDÉ D'UTILISATION D'UN MICROTOME

(30) Priorität: 18.07.2019 DE 102019119514
(43) Veröffentlichungstag der Anmeldung: 20.01.2021
(73) Patentinhaber: Leica Biosystems Nussloch GmbH, 69226 Nussloch (DE)
(72) Erfinder: TAUTENHAHN, Dirk, 35606 Solms (DE); WESTERHOFF, Karl-Heinz, 75031 Eppingen (DE); WOLL, Markus, 67125 Dannstadt-Schauernheim (DE)
(74) Vertreter: Hoffmann, Jürgen

(56) Entgegenhaltungen:
- DE-A1-102013 106 023
- US-A- 3 884 563
- TOMOYUKII FUJII: "Application of the "Nt-Cutter" Knife Blade to Microtome Sectioning of Wood", IAWA JOURNAL, Bd. 24, Nr. 3, 1. Januar 2003 (2003-01-01) , Seiten 241-245, XP055755083, NL ISSN: 0928-1541, DOI: 10.1163/22941932-90001593
- ANONYMOUS: "Histotechnology Catalogue v02", INTERNET CITATION, 30. November 2016 (2016-11-30), Seiten 1-54, XP009522463, Gefunden im Internet: URL:https://www.pfmmedical.com/fileadmin/r edaktion/BLAETTERKATALOG/catalogs/Histotec hnology_Catalogue_v02/pdf/complete.pdf [gefunden am 2020-12-01]

## Beschreibung

Die Erfindung betrifft ein Mikrotom mit einer Mikrotomklinge und mit einer Schneidvorrichtung zum Scheiden von histologischen Proben in dünne Schnittpräparate.

Die Erfindung betrifft außerdem ein Verfahren zum Betreiben eines Mikrotoms.

Von einem Patienten entnommene histologische Proben durchlaufen in einem histologischen Labor eine Vielzahl von Behandlungsschritten in verschiedenen Behandlungsstationen, bevor diese, beispielsweise mit einem Mikroskop, untersucht werden können.

Bei der Vorbereitung von histologischen Proben im Rahmen eines Einbettungsprozesses für eine spätere Mikrotomie, werden die Proben zunächst durch Anwendung eines Fixiermediums, beispielsweise Formalin, fixiert. Anschließend wird der Probe vorhandene Gewebsflüssigkeit entzogen. Dies erfolgt in mehreren Schritten durch die Behandlung mit Alkohol in aufsteigender Reinheit. Um die so behandelten Proben in einen Zustand zu überführen, der ein Schneiden mittels eines Mikrotoms erlaubt, wird in die Proben ein Einbettungsmedium - beispielsweise Paraffin, Gelatine, Agar, Nitrocellulose, Polyesterwachs, Polyethylenglykol oder Kunststoff - infiltriert. Während der vorgenannten Prozesse befinden sich die Proben zumeist in einer Kassette, die eine Vielzahl von siebartigen Öffnungen aufweist, um die Proben mit den Chemikalien umspülen zu können. Eine besondere Ausführung einer solchen Kassette ist beispielsweise aus DE 43 33 118 A1 bekannt.

Nach dem Infiltrieren des Einbettungsmediums können die Proben aus ihrer Kassette entnommen und in Paraffin eingeblockt werden. Anschließend kann der Block mit einem Mikrotom in Dünnschnitte geschnitten werden, die einzeln auf Objektträgern abgelegt werden. Anschließend können die Dünnschnitte für die mikroskopische Untersuchung gefärbt werden.

Mikrotome werden zumeist eingesetzt, um Dünnschnitte von histologischen Proben herzustellen. Zumeist weisen Mikrotome einen Messerhalter für eine Einwegklingen auf, wobei eine abgenutzte Klinge, insbesondere nach einer bestimmten Anzahl von Schneidvorgängen, entsorgt und durch eine neue Einweg-Mikrotomklinge ersetzt wird. Ein Messerhalter für ein Mikrotom ist beispielsweise aus DE 10 2004 051 974 A1 bekannt.

Aus US 3,699,830 ist ein Rotationsmikrotom bekannt. Das Rotationsmikrotom weist einen Mikrotomklingenhalter auf, der zum lösbaren Aufnehmen einer Einwegklinge ausgebildet ist.

Aus DE 10 2012 213 824 A1 ist ein Messerhalter mit einer Klingenwechselvorrichtung für ein Mikrotom bekannt. Bei diesem Messerhalter muss eine benutzte Mikrotomklinge nicht mehr aus der Klingenaufnahme der Schneideposition durch eine neue Mikrotomklinge herausgeschoben werden. Stattdessen kann sie in eine Klingenaufnahme einer Entsorgungsposition vermittels Schwerkraft verbracht werden, z.B. herausfallen, -gleiten oder rutschen. Eine neue Mikrotomklinge kann dann in die freie Klingenaufnahme der Schneideposition geschoben werden.

Aus der wissenschaftlichen Veröffentlichung, Tomoyukii Fujii, "Application of the Nt Cutter Knife Blade to Microtome Sectioning of Wood", IAWA Journal, Bd. 24, Nr. 3, 1. Januar 2003, Seiten 241 bis 245, ist eine Mikrotomklinge bekannt, auf die der Name des Herstellers aufgebracht ist.

In dem Produktkatalog pfmmedical, der im Intenet unter https://pfmmedical.com/fileadmin/redaktion/BLEATTERKATALOG/catalog s/Histotechnology_Catalogue_v02/pdf/complete.pdf abrufbar ist, ist ebenfalls eine Mikrotomklinge bekannt, auf die der Name des Herstellers aufgebracht ist.

Aus US 3 884 563 ist ein Mikrotom bekannt, mit dem dünne serielle Schnitte von organischem Material aus einer gefärbten und gefrorenen Probe geschnitten werden, Die Probe wird hierbei fortlaufend mit einer Schnittseite voran in ein rotierendes Messer geschoben und die Stirnseite gefilmt. Ein isoliertes Gehäuse hält die Probe während des Schneidens und Filmens in gefrorenem Zustand.

DE 10 2013 106 023 A1 offenbart ein System und ein Verfahren zur Herstellung von Gewebe-Feinobjekten, wobei ein Objektträger und/oder ein auf einen solchen Objektträger aufgebrachtes Gewebe-Feinobjekt zu einem Objektbehälter und/oder einem aus einem solchen Objektbehälter entnommenen Gewebe-Objekt automatisiert und eindeutig zugeordnet wird. Ein Sensor, der als Kamera ausgebildet sein kann, nimmt ein Bild des Gewebe-Feinobjekts nach dem Abtrennen oder ein Bild einer Schnittfläche des Gewebe-Objekts vor oder nach dem Abtrennen des Gewebe-Feinobjekts auf.

Es ist die Aufgabe der vorliegenden Erfindung, ein Mikrotom anzugeben, das die Sicherheit des Prozessablaufs bei der Bearbeitung von histologischen Proben erhöht.

Die Aufgabe wird durch ein Mikrotom gelöst, das dadurch gekennzeichnet ist, dass auf die Mikrotomklinge ein optisch ablesbares Bildmuster aufgebracht ist, und dass eine optische Lesevorrichtung vorhanden ist, die das Bildmuster von der Mikrotomklinge abliest, analoge oder digitale Bildsignale bezüglich des abgelesenen Bildmusters erzeugt und die Bildsignale an eine Steuerungsvorrichtung des Mikrotoms übergibt.

In erfindungsgemäßer Weise wurde erkannt, dass unterschiedliche Mikrotomklingen, beispielsweise Mikrotomklingen unterschiedlicher Hersteller oder Mikrotomklingen, die in unterschiedlichen Produktionsprozessen hergestellt wurden, ganz unterschiedliche Eigenschaften aufweisen. Insbesondere kann es beispielsweise sein, dass Mikrotomklingen eines ersten Herstellers besonders gut in einem bestimmten Mikrotom einsetzbar sind, während die Verwendung von Mikrotomklingen eines anderen Herstellers mit diesem Mikrotom zu keinen guten Schneidergebnissen führt. Insbesondere kann es nachteiliger Weise beispielsweise vorkommen, dass die Schnitte unsauber sind, Löcher oder Feinrisse in den Dünnschnitten auftreten, Messerspuren und/oder Rattermarken in den Dünnschnitten zu erkennen sind oder es zu Stauchungen innerhalb der Dünnschnitte kommt. Dies kann beispielsweise darauf zurückzuführen sein, dass die Mikrotomklingen unterschiedlicher Hersteller oder unterschiedlicher Produktserien aus unterschiedlichen Materialien oder Materialmischungen und/oder durch unterschiedliche Herstellverfahren hergestellt sind.

Hierbei ist es eine ganz besondere Schwierigkeit, dass der Benutzer in aller Regel den verwendeten Mikrotomklingen nicht unmittelbar ansehen kann, ob in Kombination mit dem von ihm verwendeten Mikrotom gute Schneidergebnisse erzielbar sind. Insbesondere kann es in nachteiliger Weise vorkommen, dass in großen Stückzahlen qualitativ nicht ausreichend gute Dünnschnitte hergestellt werden, ohne dass das Laborpersonal die Mangelhaftigkeit der Mikrotomklingen unmittelbar bemerkt. Zumeist tritt erst nach einer aufwändigen Färbung bei einer späteren mikroskopischen Untersuchung (nach einer aufwändigen Färbung der Dünnschnitte) zu Tage, dass die Dünnschnitte mangelhaft sind, wobei zumeist nicht unmittelbar erkennbar ist, ob die Mängel auf die Verwendung einer ungeeigneten Mikrotomklinge zurückzuführen sind oder beispielsweise auf Anwendungsfehler des Laborpersonals.

Das erfindungsgemäße Mikrotom hat den ganz besonderen Vorteil, dass mittels der optischen Lesevorrichtung vorab festgestellt werden kann, ob mit der Mikrotomklinge, die gerade zum Einsatz gebracht werden soll, qualitativ gute Dünnschnitte hergestellt werden können oder nicht. Hierzu liest das Mikrotom mittels der optischen Lesevorrichtung ein Bildmuster, das beispielsweise ein Hersteller- oder Produkt-Logo sein kann oder beinhalten kann, von der jeweils zu verwendenden Mikrotomklinge ab und übergibt entsprechende analoge oder digitale Bildsignale bezüglich des abgelesenen Bildmusters an eine Steuerungsvorrichtung.

Stellt die Steuerungsvorrichtung nach einer Auswertung der empfangenen Bildsignale beispielsweise fest, dass die Mikrotomklinge einem bestimmten Hersteller und/oder einer bestimmten Produktserie zuzuordnen ist, kann sie im nächsten Schritt beispielsweise festlegen ob und/oder mit welchen Schneidparametern ein Schneidvorgang erfolgen soll. Hierfür ist es von Vorteil, wenn in einer Speichervorrichtung der Steuerungsvorrichtung die relevanten Daten bezüglich der Mikrotomklingen unterschiedlicher Hersteller oder unterschiedlicher Produktserien hinterlegt sind. Insbesondere kann vorteilhaft eine Zuordnung von unterschiedlichen Bildmustern zu der Information, ob eine Mikrotomklinge mit dem Mikrotom im Hinblick auf qualitativ ausreichend gute Schneidergebnisse verwendbar ist, in einer Speichereinrichtung der Steuerungsvorrichtung abgelegt sein. Es ist vorteilhaft insbesondere auch möglich, dass in der Speichereinrichtung eine Zuordnung von Eigenschaften einer Mikrotomklinge, wie Messerart und/oder Schlifftyp, zu deren Bildmuster abgespeichert ist.

Es ist insbesondere möglich, dass die Steuerungsvorrichtung feststellt, wenn mit einer Mikrotomklinge, von der gerade ein Bildmuster abgelesen wurde, in Kombination mit dem Mikrotom keine Dünnschnitte ausreichender Qualität herstellbar sind. In diesem Fall kann beispielsweise die Verwendung der Mikrotomklinge verweigert werden und/oder eine Warnung an den Benutzer des Mikrotoms ausgegeben werden. Beispielsweise kann vorgesehen sein, dass die Steuerungsvorrichtung die Schneidvorrichtung und/oder eine, insbesondere automatische, Mikrotomklingen-Wechselvorrichtung blockiert.

In einem solchen Fall kann alternativ auch vorgesehen sein, dass eine Freigabe der Schneidvorrichtung und/oder der Mikrotomklingen-Wechselvorrichtung erst nach Ausgabe einer Warnmeldung und nach einer Bestätigung durch das Laborpersonal, dass ein Schneidvorgang dennoch gewünscht ist, erfolgt. Entsprechend kann vorsichtshalber auch dann in dieser Weise verfahren werden, wenn eine Mikrotomklinge kein für die optische Lesevorrichtung erfassbares Bildmuster aufweist oder wenn einem erfassten Bildmuster kein Hersteller und/oder keine Produktserie zugeordnet werden kann.

Ganz allgemein kann vorteilhaft vorgesehen sein, dass die Steuerungsvorrichtung die empfangenen Bildsignale auswertet und in Abhängigkeit von dem Auswerteergebnis wenigstens einen Handlungsschritt festlegt.

Die Festlegung des wenigstens einen Handlungsschritts ist nicht zwingend abschließend. Beispielsweise kann die Steuerungsvorrichtung als Handlungsschritt zunächst festlegen, dass eine Eingabe des Benutzers verlangt wird. Nach dem Erhalt der Eingabe und je nach der Entscheidung des Benutzers kann die Steuerungsvorrichtung dann weitere Handlungsschritte festlegen.

Die Anforderung einer Eingabe von einem Benutzer kann insbesondere erfolgen, wenn eine Mikrotomklinge verwendet werden soll, die mit dem Mikrotom nicht kompatibel ist oder wenn eine Mikrotomklinge kein für die optische Lesevorrichtung erfassbares Bildmuster aufweist oder wenn einem erfassten Bildmuster bei der Auswertung kein Hersteller und/oder keine Produktserie zugeordnet werden kann.

Die Anforderung einer Eingabe von einem Benutzer und/oder die Ausgabe einer Warnmeldung an den Benutzer kann insbesondere auch dann erfolgen, wenn die Steuerungsvorrichtung feststellt, dass die aktuellen Schneidparameter des Mikrotoms, beispielsweise hinsichtlich Schneidwinkel und/oder Schnittgeschwindigkeit, oder die Eigenschaften der zu schneidenden Probe mit der Mikrotomklinge, deren Bildmuster abgelesen wurde, zu keinen guten Schneidergebnissen führen wird. Der Schneidwinkel ist der Winkel zwischen der Richtung der Ebene der Mikrotomklinge und der Schnittrichtung.

Das Mikrotom kann eine Taste oder ein Tastenfeld und/oder eine andere Eingabevorrichtung aufweisen, mittels der der Benutzer eine Eingabe machen kann. Es ist alternativ oder zusätzlich auch möglich, dass die Eingabe über einen Computer eingegeben wird, an den das Mikrotom direkt oder über ein Netzwerk angeschlossen ist. Die Steuerungsvorrichtung wertet die Eingabe aus und kann dann in Abhängigkeit von dem Inhalt der Eingabe einen bereits festgelegten Handlungsschritt löschen und/oder wenigstens einen weiteren Handlungsschritt festlegen. Beispielsweise kann die Steuerungsvorrichtung den ursprünglich vorgesehenen Handlungsschritt, dass die Schneidvorrichtung blockiert werden soll, löschen, wenn der Benutzer eingegeben hat, dass ein Schneidvorgang trotz der Warnung mit der nicht kompatiblen Mikrotomklinge erfolgen soll.

Bei einer ganz besonders vorteilhaften Ausführung kann die Steuerungsvorrichtung einen Mikrotomklingenwechsel bis zum Eintreffen der Eingabe stoppen.

Wie bereits erwähnt ist es möglich, dass einer der Handlungsschritte beinhaltet, eine Nachricht an einen Benutzer auszugeben. Beispielsweise kann das erfindungsgemäße Mikrotom derart eingerichtet sein, dass die Steuerungsvorrichtung die Nachricht ausgibt, dass alles in Ordnung ist und ein ordnungsgemäßer Schneidvorgang erfolgen kann, wenn die Steuerungsvorrichtung die Mikrotomklinge erkannt hat und festgestellt hat, dass qualitativ hochwertige Dünnschnitte herstellbar sind.

Analog ist es auch möglich, dass eine Warnmeldung ausgeben wird, wenn die Steuerungsvorrichtung erkannt hat, dass qualitativ ausreichend gute Dünnschnitte nicht herstellbar sind oder wenn die Steuerungsvorrichtung dem erfassten Bildmuster bei der Auswertung keinen Hersteller und/oder keine Produktserie zuordnen konnte.

Insbesondere kann ein von der Steuerungsvorrichtung festgelegter Handlungsschritt beinhalten, das Ausführen von Schneidvorgängen mit der Mikrotomklinge zuzulassen, deren Bildmuster abgelesen und ausgewertet wurde. Diesen Handlungsschritt legt die Steuerungsvorrichtung beispielsweise dann fest, wenn sie das von der Mikrotomklinge abgelesene Bildmuster einem bestimmten Hersteller und/oder einer bestimmten Produktserie zuordnen konnte, von der die Steuerungsvorrichtung die Information hat, dass in Kombination mit dem Mikrotom qualitativ gute Dünnschnitte herstellbar sind.

Insbesondere zu diesem Zweck kann eine Zuordnung von unterschiedlichen Bildmustern zu der Information, ob ein qualitativ ausreichend Dünnschnitt möglich ist oder nicht, in einer Speichereinrichtung der Steuerungsvorrichtung abgelegt sein.

Alternativ oder zusätzlich kann auch vorgesehen sein, dass die Zuordnung, die in einer Speichervorrichtung der Steuerungsvorrichtung abgelegt ist, noch detailliertere Informationen, beispielsweise Informationen über wenigstens einen erforderlichen Schneidparameter, beinhaltet. Der Schneidparamater kann beispielsweise den Schneidwinkel und/oder die Schnittgeschwindigkeit betreffen.

Bei einer besonders flexibel einsetzbaren Ausführung des erfindungsgemäßen Mikrotoms passt die Steuerungsvorrichtung wenigstens einen Schneidparameter des Mikrotoms an den bzw. die als erforderlich ermittelten Schneidparameter individuell an.

Die optische Lesevorrichtung kann beispielsweise als Kamera, insbesondere als CCD-Kamera, ausgebildet sein.

Vorzugsweise weist das Mikrotom einen Mikrotomklingenhalter auf, in dem eine Mikrotomklinge in einer Schneidposition wieder lösbar befestigbar ist. Bei einer vorteilhaften Ausführung ist die optische Lesevorrichtung dazu ausgebildet und angeordnet ist, ein Bildmuster von einer in dem Mikrotomklingenhalter angeordneten Mikrotomklinge abzulesen. Insbesondere kann die optische Lesevorrichtung in den Mikrotomklingenhalter integriert sein.

Bei einer ganz besonders vorteilhaften Ausführung weist das Mikrotom einen Mikrotomklingen-Vorratsbehälter auf, in dem mehrere Mikrotomklingen bevorratet werden. Auf dieses Weise steht stets Ersatz zur Verfügung, wenn die gerade in Benutzung befindliche Mikrotomklinge verschlissen ist. Bei dieser Ausführung kann die optische Lesevorrichtung dazu ausgebildet und angeordnet sein, ein Bildmuster von einer in dem Mikrotomklingen-Vorratsbehälter angeordneten Mikrotomklinge abzulesen.

Alternativ oder zusätzlich kann das Mikrotom eine Mikrotomklingen-Wechselvorrichtung aufweisen, die dazu ausgebildet ist, dem Mikrotomklingen-Vorratsbehälter, insbesondere automatisch, eine Mikrotomklinge zu entnehmen und zu dem Mikrotomklingenhalter zu transportieren. Hierbei kann vorteilhaft insbesondere vorgesehen sein, dass die optische Lesevorrichtung das Bildmuster während des Transports zu dem Mikrotomklingenhalter von einer Mikrotomklinge abliest. Dies hat den besonderen Vorteil, dass das Ablesen des Bildmusters zeitlich parasitär erfolgen kann, so dass der gesamte Prozessablauf nicht verlangsamt wird. Die optische Lesevorrichtung kann insbesondere in die Mikrotomklingen-Wechselvorrichtung integriert sein.

Bei einer ganz besonders vorteilhaften Ausführung führt die Steuerungsvorrichtung ein Protokoll. Insbesondere kann vorteilhaft vorgesehen sein, dass für jede einzelne Mikrotomklinge protokolliert wird, ob ein Bildmuster abgelesen werden konnte und/oder ob ein abgelesenes Bildmuster ausgewertet werden konnte und/oder ob ein abgelesenes Bildmuster einem Hersteller oder einer Produktserie zugeordnet werden konnte. Das Protokoll kann insbesondere das Bildmuster als solches und/oder Daten bezüglich der Mikrotomklinge beinhalten. Darüber hinaus kann das Protokoll Informationen über den Zeitpunkt der Verwendung der Mikrotomklinge und/oder über jede geschnittene Probe und/oder über einen zugeordneten Patienten und/oder den Herstellzeitpunkt der Mikrotomklinge und/oder die Chargennummer der Mikrotomklinge und/oder eine fortlaufende Nummerierung, numerisch oder alphanumerisch, auf der Mikrotomklinge und/oder die aufgetretenden Warnmeldungen beinhalten.

Vorzugsweise legt die Steuerungsvorrichtung die Protokolldaten fortlaufend in einem Speicher ab und/oder gibt die Protokolldaten über eine Schnittstelle aus. Es ist alternativ oder zusätzlich auch möglich, dass die Steuerungsvorrichtung die Protokolldaten auf einer Ausgabevorrichtung, beispielsweise einem Display des Mikrotoms, anzeigt, insbesondere fortlaufend anzeigt.

Bei einer ganz besonders vorteilhaften Ausführung werden die Protokolldaten an einen übergeordneten Computer übertragen und dort gespeichert und/oder weiterverarbeitet.

Insbesondere - und nach einem eigenständigen Erfindungsgedanken - kann vorteilhaft vorgesehen sein, dass der übergeordnete Computer weitere Protokolldaten anderer Mikrotome und/oder anderer Laborgeräte empfängt und, insbesondere zusammen mit den Protokolldaten des Mikrotoms, abspeichert und/oder weiter verarbeitet. Ganz allgemein und nach dem eigenständigen Erfindungsgedanken ist ein Histologie-Laborsystem von besonderem Vorteil, das einen übergeordneten Computer beinhaltet, der Protokolldaten von einem erfindungsgemäßen Mikrotom und/oder weitere Protokolldaten von anderen Laborgeräten empfängt, abspeichert und/oder weiterverarbeitet.

Vorzugsweise werden die Protokolldaten und die weiteren Protokolldaten, die dieselbe Probe betreffen, von dem übergeordneten Computer einander zugeordnet und gemeinsam abgespeichert und/oder weiterverarbeitet. Insbesondere ist es so ermöglicht, dass von dem übergeordneten Computer, insbesondere Probenspezifisch, ein übergeordnetes Protokoll erstellt wird, welches die von dem Mikrotom übermittelten Protokolldaten und die weiteren Protokolldaten anderer Mikrotome und/oder anderer Laborgeräte beinhaltet. Das übergeordnete Protokoll kann vorzugsweise Daten hinsichtlich sämtlicher Prozessschritte bei der Bearbeitung einer Probe in einem histologischen Labor beinhalten. Insoweit kann das übergeordnete Protokoll insbesondere Protokolldaten und weitere Protokolldaten beinhalten, die die Verarbeitung einer Probe von der Zuschneidestation bis zur Diagnose mittels eines Mikroskops beinhalten. Allerdings ist es auch möglich, dass das übergeordnete Protokoll Protokolldaten und weitere Protokolldaten eines Teilabschnitts eines solchen Bearbeitungsablaufs einer Probe beinhaltet.

Bei einer Variante erfolgt eine Protokollierung ausschließlich nur in den als problematisch erkannten Fällen, beispielsweise weil kein Bildmuster abgelesen werden konnte oder weil sich nach der Auswertung ergeben hat, dass ein Dünnschnitt unter Verwendung der Mikrotomklinge, deren Bildmuster abgelesen wurde, nicht mit ausreichend guter Qualität erfolgen kann.

Insbesondere kann einer der Handlungsschritte beinhalten, die Bildsignale des abgelesenen Bildmusters zu speichern und/oder eine durch die Steuerungsvorrichtung ermittelte Information über die Mikrotomklinge zu speichern. Dies kann insbesondere in der Weise erfolgen, dass eine Ablage der entsprechenden Daten in dem oben bereits erwähnten Protokoll erfolgt.

Bei einer ganz besonders vorteilhaften Ausführung vergleicht die Steuerungsvorrichtung die von der optischen Lesevorrichtung empfangenen Bildsignale mit den Bildsignalen wenigstens eines Referenzbildmusters. Hierzu kann eine Speichervorrichtung vorhanden sein, in der Bildsignale wenigstens eines Referenzbildmusters gespeichert sind oder speicherbar sind. Die Steuerungsvorrichtung kann die Referenzbildmuster einzeln aus der Speichervorrichtung abrufen und mit den von der optischen Lesevorrichtung empfangenen Bildsignalen vergleichen.

Die optische Lesevorrichtung kann insbesondere dazu ausgebildet und angeordnet sein, ein als Barcode oder als QR-Code oder als Logo oder als Schriftzug ausgebildetes Bildmuster abzulesen. Der Schriftzug kann dabei als fortlaufende alphanumerische oder numerische Nummerierung ausgebildet sein. Hinsichtlich der Art der ablesbaren Bildmustergibt es keine grundsätzlichen Beschränkungen.

Bei einer ganz besonders vorteilhaften Ausführung ist es insbesondere nicht erforderlich, dass die Bildmuster stets an dem gleichen Ort der Mikrotomklingen angeordnet sind. Vielmehr wird bei dieser Ausführung mittels der optischen Lesevorrichtung jeweils die gesamte Mikrotomklinge erfasst, um festzustellen, wo sich ein auswertbares Bildmuster befindet.

Das erfindungsgemäße Mikrotom kann insbesondere als Schlittenmikrotom oder als Rotationsmikrotom oder als Vibratom oder als Sägemikrotom ausgebildet sein.

Von ganz besonderem Vorteil ist eine Mikrotomklinge, insbesondere für ein erfindungsgemäßes Mikrotom, auf die ein optisch ablesbares Bildmuster aufgebracht ist, wobei das Bildmuster eine Information über den Herstellzeitpunkt der Mikrotomklinge und/oder über die Messerart und/oder über den Schlifftyp und/oder über die Mikrotomklingengröße beinhaltet. Das Bildmuster kann beispielsweise ein Hersteller- oder Produkt-Logo und/oder eine fortlaufende Nummerierung, die numerisch oder alphanumerisch ausgebildet ist, beinhalten. Über diese Nummerierung lassen sich beispielsweise der Herstellzeitpunkt, Herstellort und das für die Produktion der Mikrotomklinge verwendete Gerät bestimmen.

Das Bildmuster kann beispielsweise aufgedruckt sein. Es ist alternativ beispielsweise auch möglich, dass das Bildmuster, insbesondere mittels Laser, eingraviert oder durch ein Ätzverfahren aufgebracht ist.

Von besonderem Vorteil ist ganz allgemein ein Verfahren zum Betreiben eines Mikrotoms, wobei das Verfahren beinhaltet, ein auf die Mikrotomklinge aufgebrachtes, optisch ablesbares Bildmuster abzulesen und analoge oder digitale Bildsignale bezüglich des abgelesenen Bildmusters zu erzeugen, die dann, insbesondere für eine Auswertung, an eine Steuerungsvorrichtung des Mikrotoms übergeben werden. Das Verfahren kann, wie oben bereits erläutert, insbesondere beinhalten festzustellen, ob mit der Mikrotomklinge, die gerade zum Einsatz gebracht werden soll, qualitativ gute Dünnschnitte hergestellt werden können oder nicht.

Ganz allgemein ist ein Mikrotom mit einer Schneidvorrichtung zum Scheiden von histologischen Proben in dünne Schnittpräparate von besonderem Vorteil, das gekennzeichnet ist durch eine optische Lesevorrichtung, die ein Bildmuster von einer Mikrotomklinge abliest, analoge oder digitale Bildsignale bezüglich des abgelesenen Bildmusters erzeugt und die Bildsignale an eine Steuerungsvorrichtung des Mikrotoms übergibt. Das Mikrotom kann eines oder mehrere der oben beschriebenen zusätzlichen Merkmale aufweisen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Mikrotoms,
- Fig.2: ein zweites Ausführungsbeispiel eines erfindungsgemäßen Mikrotoms, und
- Fig. 3: ein drittes Ausführungsbeispiel eines erfindungsgemäßen Mikrotoms, und
- Fig. 4: ein Detail eines vierten Ausführungsbeispiels eines erfindungsgemäßen Mikrotoms samt einer erfindungsgemäßen Mikrotomklinge.

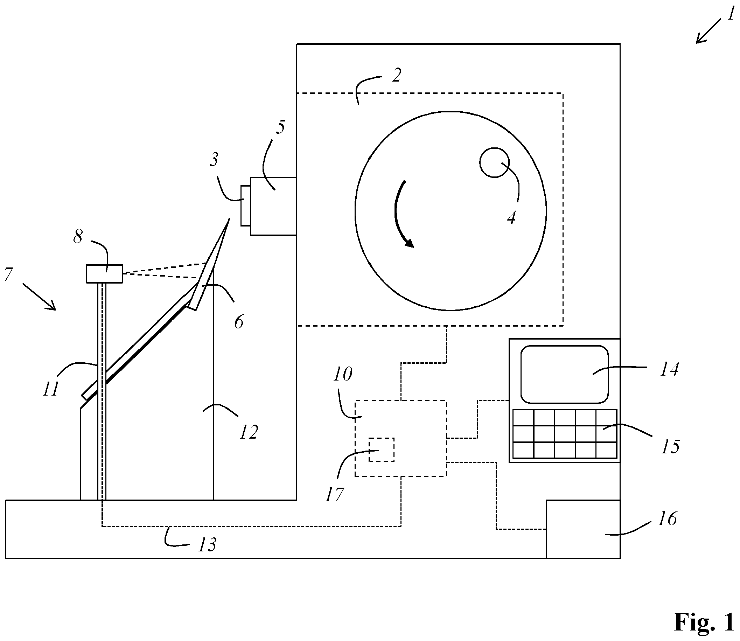

Figur 1 zeigt ein erstes Ausführungsbeispiel eines erfindungsgemäßen Mikrotoms 1. Das Mikrotom 1 weist eine Schneidvorrichtung 2 zum Scheiden von histologischen Proben 3 in dünne Schnittpräparate auf. Die Schneidvorrichtung wird mit einer Handkurbel 4 betrieben und weist einen Probenhalter 5 auf, der sich bei einem Schneidvorgang relativ zu einer Mikrotomklinge 6, die in einem Mikrotomklingenhalter 7 befestigt ist, bewegt.

Das Mikrotom 1 weist eine in den Mikrotomklingenhalter 7 integrierte optische Lesevorrichtung 8 auf, die ein (in dieser Figur nicht sichtbares) Bildmuster 9 von der Mikrotomklinge 6 abliest.

Die optische Lesevorrichtung 8 erzeugt analoge oder digitale Bildsignale bezüglich des abgelesenen Bildmusters 9 erzeugt und übergibt die Bildsignale an eine Steuerungsvorrichtung 10 des Mikrotoms. Die optische Lesevorrichtung 8 ist seitlich mittels einer rohrförmigen Halterung 11, die seitlich an einem Pult 12 des Mikrotomklingenhalters 7 befestigt ist, fixiert. Durch die rohrförmige Halterung 11 verläuft ein Datenkabel 13, das die optische Lesevorrichtung 8 mit der Steuerungsvorrichtung 10 verbindet.

Das Mikrotom 10 weist darüber hinaus ein Display 14 auf, mittels dem Nachrichten an einen Benutzer ausgegeben werden können. Insbesondere kann das Display 14 auch dazu dienen, Eingaben von einem Benutzer anzufordern, die der Benutzer über eine Eingabevorrichtung 15, die beispielsweise ein Tastenfeld sein kann, eingeben kann. Das Display 14 kann beispielsweise auch dazu dienen, fortlaufend Informationen überdie mittels der optischen Lesevorrichtung erkannten Bildmuster 9 und/oder die Auswerteergebnisse hinsichtlich der abgelesenen Bildmuster anzuzeigen.

Das Mikrotom 1 weist eine Schnittstelle 16 zum Anschließen an ein Computernetzwerk oder zum unmittelbaren Anschließen an einen Computer auf.

Die Steuerungsvorrichtung 10 beinhaltet eine Speichervorrichtung 17, in der Bildsignale von Referenzbildmustern abgelegt sein können und/oder in der Informationen hinsichtlich der optisch abgelesenen Bildmuster 9 und/oder der Auswerteergebnisse und/oder hinsichtlich der Mikrotomklinge 6 und/oder der Daten hinsichtlich des jeweils abgelesenen Bildmusters 9 und/oder hinsichtlich der vorzunehmenden oder vorgenommenen Handlungsschritte abgelegt werden können. Insbesondere kann in der Speichervorrichtung 17 vorteilhaft ein Protokoll abgelegt werden, das über die Schnittstelle 16 an einen angeschlossenen Computer weitergeleitet werden kann und/oder das auf dem Display 14 dargestellt werden kann.

Das Mikrotom 1 stellt vorab fest, ob mit der Mikrotomklinge 6, die gerade zum Einsatz gebracht werden soll und deren Bildmuster 9 abgelesen wurde, qualitativ gute Dünnschnitte hergestellt werden können oder nicht. Stellt die Steuerungsvorrichtung 10 nach einer Auswertung der empfangenen Bildsignale fest, dass die Mikrotomklinge 6 einen bestimmten Hersteller und/oder einer bestimmten Produktserie zuzuordnen ist, legt sie im nächsten Schritt beispielsweise fest ob und/oder mit welchen Schneidparametern ein Schneidvorgang erfolgen soll.

Hierfür sind in der Speichervorrichtung 17 der Steuerungsvorrichtung 10 die relevanten Daten bezüglich der Mikrotomklingen 6 unterschiedlicher Hersteller oder unterschiedlicher Produktserien hinterlegt. Es ist darüber hinaus eine Zuordnung von unterschiedlichen Bildmustern 9 zu der Information, ob eine Mikrotomklinge 6 mit dem Mikrotom 1 im Hinblick auf qualitativ ausreichend gute Schneidergebnisse verwendbar ist, in der Speichereinrichtung 17 abgelegt.

Wenn die Steuerungsvorrichtung feststellt, dass mit der Mikrotomklinge 6, von der gerade ein Bildmuster 9 abgelesen wurde, in Kombination mit dem Mikrotom 1 keine Dünnschnitte ausreichender Qualität herstellbar sind, wird die Verwendung der Mikrotomklinge 6 verweigert und/oder wird eine Warnung an den Benutzer des Mikrotoms 1 ausgegeben. Das Mikrotom 1 kann so voreingestellt werden, dass die Steuerungsvorrichtung 10 die Schneidvorrichtung 2 blockiert. In einem solchen Fall ist vorgesehen, dass eine Freigabe der Schneidevorrichtung 2 erst nach Ausgabe einer Warnmeldung und nach einer Bestätigung durch das Laborpersonal, dass ein Schneidvorgang dennoch gewünscht ist, erfolgt. Entsprechend wird verfahren, wenn eine Mikrotomklinge 6 kein fürdie optische Lesevorrichtung 8 erfassbares Bildmuster 9 aufweist oder wenn einem erfassten Bildmuster kein Hersteller und/oder keine Produktserie zugeordnet werden kann. Wenn die Steuerungsvorrichtung 10 hingegen feststellt, dass mit der Mikrotomklinge 6, von der gerade ein Bildmuster 9 abgelesen wurde, in Kombination mit dem Mikrotom 1 Dünnschnitte ausreichender Qualität herstellbar sind, gibt sie die Schneidvorrichtung 2 frei.

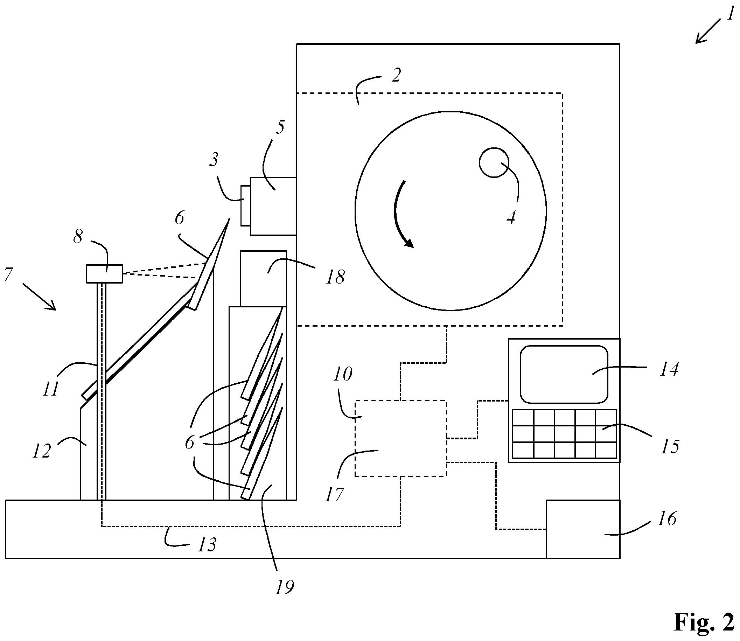

Figur 2 zeigt ganz schematisch ein zweites Ausführungsbeispiel eines erfindungsgemäßen Mikrotoms 1, das im Wesentlichen genauso aufgebaut ist, wie das in Figur 1 dargestellte Mikrotom 1. Allerdings weist das in Figur 2 dargestellte Mikrotom 1 zusätzlich eine Mikrotomklingen-Wechselvorrichtung 18 auf, die einem Mikrotomklingen-Vorratsbehälter 19, in dem mehrere Mikrotomklingen 6 bevorratet sind, eine Mikrotomklinge 6 entnimmt und zu dem Mikrotomklingenhalter 7 transportiert, wenn die in dem Mikrotomklingenhalter 7 ausgetauscht werden muss.

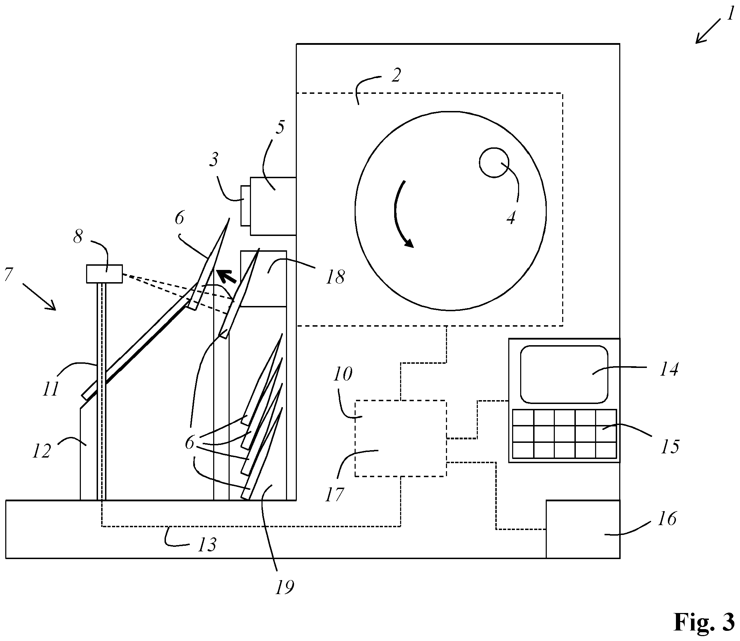

Figur 3 zeigt ganz schematisch ein drittes Ausführungsbeispiel eines erfindungsgemäßen Mikrotoms 1, das im Wesentlichen genauso aufgebaut ist, wie das in Figur 2 dargestellte Mikrotom 1.

Auch das in Figur 3 dargestellte Mikrotom 1 weist eine Mikrotomklingen-Wechselvorrichtung 18 auf, die einem Mikrotomklingen-Vorratsbehälter 19, in dem mehrere Mikrotomklingen 6 bevorratet sind, eine Mikrotomklinge 6 entnimmt und zu dem Mikrotomklingenhalter 7 transportiert, wenn die in dem Mikrotomklingenhalter 7 ausgetauscht werden muss. Hierbei ist vorgesehen, dass die optische Lesevorrichtung 8 das Bildmuster 9 während des Transports zu dem Mikrotomklingenhalter 7 von einer Mikrotomklinge 6 abliest.

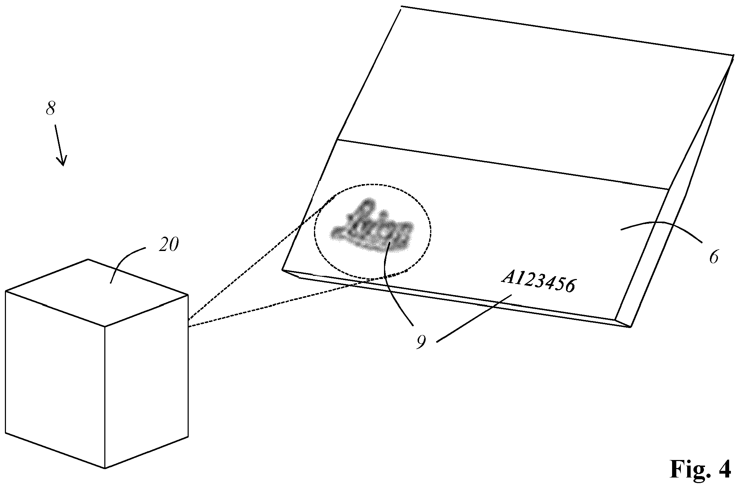

Fig. 4 zeigt ein Detail eines vierten Ausführungsbeispiels eines erfindungsgemäßen Mikrotoms 1, nämlich eine als Kamera 20 ausgebildete optische Lesevorrichtung 8, die gerade ein Bildmuster 9 von einer erfindungsgemäßen Mikrotomklinge 6 abliest. Die optische Lesevorrichtung 8 kann insbesondere dazu ausgebildet und angeordnet sein, ein als Barcode oder als QR-Code oder als Logo oder als Schriftzug und/oder als fortlaufende Nummerierung ausgebildetes Bildmuster 9 abzulesen.

### Bezuaszeic henliste:

- 1: Mikrotom
- 2: Schneidvorrichtung
- 3: Probe
- 4: Handkurbel
- 5: Probenhalter
- 6: Mikrotomklinge
- 7: Mikrotomklingenhalter
- 8: optische Lesevorrichtung
- 9: Bildmuster
- 10: Steuerungsvorrichtung
- 11: Halterung
- 12: Pult
- 13: Datenkabel
- 14: Display
- 15: Eingabevorrichtung
- 16: Schnittstelle
- 17: Speichervorrichtung
- 18: Mikrotomklingen-Wechselvorrichtung
- 19: Mikrotomklingen-Vorratsbehälter
- 20: Kamera

## Patentansprüche

1. Mikrotom (1) mit einer Mikrotomklinge (6) und mit einer Schneidvorrichtung (2) zum Scheiden von histologischen Proben (3) in dünne Schnittpräparate, wobei auf die Mikrotomklinge (6) ein optisch ablesbares Bildmuster (9) aufgebracht ist, und dass eine optische Lesevorrichtung (8) vorhanden ist, die das Bildmuster (9) von der Mikrotomklinge (6) abliest, analoge oder digitale Bildsignale bezüglich des abgelesenen Bildmusters (9) erzeugt und die Bildsignale an eine Steuerungsvorrichtung (10) des Mikrotoms (1) übergibt.

2. Mikrotom (1) nach Anspruch 1, **dadurch gekennzeichnet, dass**
a. das Mikrotom (1) einen Mikrotomklingenhalter (7) aufweist, in dem die Mikrotomklinge (6) in einer Schneidposition wieder lösbar befestigt ist oder befestigbar ist, oder dass
b. das Mikrotom (1) einen Mikrotomklingenhalter (7) aufweist, in dem die Mikrotomklinge (6) in einer Schneidposition wieder lösbar befestigt ist oder befestigbar ist, wobei die optische Lesevorrichtung (8) dazu ausgebildet und angeordnet ist, das Bildmuster (9) von der in dem Mikrotomklingenhalter (7) angeordneten Mikrotomklinge (6) abzulesen, oder dass
c. das Mikrotom (1) einen Mikrotomklingenhalter (7) aufweist, in dem die Mikrotomklinge (6) in einer Schneidposition wieder lösbar befestigt ist oder befestigbar ist, wobei die optische Lesevorrichtung (8) in den Mikrotomklingenhalter (7) integriert ist, oder dass
d. das Mikrotom (1) einen Mikrotomklingenhalter (7) aufweist, in dem die Mikrotomklinge (6) in einer Schneidposition wieder lösbar befestigt ist oder befestigbar ist, wobei die optische Lesevorrichtung (8) in den Mikrotomklingenhalter (7) integriert und dazu ausgebildet und angeordnet ist, das Bildmuster (9) von der in dem Mikrotomklingenhalter (7) angeordneten Mikrotomklinge (6) abzulesen.

3. Mikrotom (1) nach Anspruch 1 oder 2, **dadurch gekennzeichnet, dass**
a. das Mikrotom (1) einen Mikrotomklingen-Vorratsbehälter (19) aufweist, oder dass
b. das Mikrotom (1) einen Mikrotomklingen-Vorratsbehälter (19) aufweist, wobei die optische Lesevorrichtung (8) dazu ausgebildet und angeordnet ist, ein Bildmuster (9) von einer in dem Mikrotomklingen-Vorratsbehälter (19) angeordneten Mikrotomklinge (6) abzulesen, oder dass
c. das Mikrotom (1) einen Mikrotomklingen-Vorratsbehälter (19) und eine Mikrotomklingen-Wechselvorrichtung (18) aufweist, die dazu ausgebildet ist, dem Mikrotomklingen-Vorratsbehälter (19) eine Mikrotomklinge (6) zu entnehmen und zu dem Mikrotomklingenhalter (7) zu transportieren, oder dass
d. das Mikrotom (1) einen Mikrotomklingen-Vorratsbehälter (19) und eine Mikrotomklingen-Wechselvorrichtung (18) aufweist, die dazu ausgebildet ist, dem Mikrotomklingen-Vorratsbehälter (19) eine Mikrotomklinge (6) zu entnehmen und zu dem Mikrotomklingenhalter (7) zu transportieren, wobei die optische Lesevorrichtung (8) das Bildmuster (9) während des Transports zu dem Mikrotomklingenhalter (7) von einer Mikrotomklinge (6) abliest, oder dass
e. das Mikrotom (1) einen Mikrotomklingen-Vorratsbehälter (19) und eine Mikrotomklingen-Wechselvorrichtung (18) aufweist, die dazu ausgebildet ist, dem Mikrotomklingen-Vorratsbehälter (19) eine Mikrotomklinge (6) zu entnehmen und zu dem Mikrotomklingenhalter (7) zu transportieren, wobei die optische Lesevorrichtung (8) in die Mikrotomklingen-Wechselvorrichtung (18) integriert ist.

4. Mikrotom (1) nach einem der Ansprüche 1 bis 3, **dadurch gekennzeichnet, dass** die Steuerungsvorrichtung (10) die empfangenen Bildsignale auswertet und in Abhängigkeit von dem Auswerteergebnis wenigstens einen Handlungsschritt festlegt.

5. Mikrotom (1) nach Anspruch 4, **dadurch gekennzeichnet, dass**
a. der wenigstens eine Handlungsschritt beinhaltet, die Schneidvorrichtung (2) zu blockieren, oder dass
b. der wenigstens eine Handlungsschritt beinhaltet, einen Mikrotomklingenwechsel zu blockieren oder zu stoppen, oder dass
c. der wenigstens eine Handlungsschritt beinhaltet, die Schneidvorrichtung (2) für wenigstens einen Schneidvorgang frei zu geben, oder dass
d. der wenigstens eine Handlungsschritt beinhaltet, eine Eingabe von einem Benutzer anzufordern, oder dass
e. der wenigstens eine Handlungsschritt beinhaltet, eine Eingabe von einem Benutzer anzufordern, wobei die Steuerungsvorrichtung (10) die Eingabe auswertet und in Abhängigkeit von der Eingabe einen bereits festgelegten Handlungsschritt löscht und/oder wenigstens einen weiteren Handlungsschritt festlegt, oder dass
f. der wenigstens eine Handlungsschritt beinhaltet, eine Eingabe von einem Benutzer anzufordern, wobei die Schneidvorrichtung (2) bis zum Eintreffen der Eingabe blockiert, oder dass
g. der wenigstens eine Handlungsschritt beinhaltet, eine Eingabe von einem Benutzer anzufordern, wobei die Steuerungsvorrichtung (10) einen Mikrotomklingenwechsel bis zum Eintreffen der Eingabe stoppt, oder dass
h. der wenigstens eine Handlungsschritt beinhaltet, eine Nachricht an einen Benutzer auszugeben, oder dass
i. der wenigstens eine Handlungsschritt beinhaltet, die Mikrotomklinge (6), von der das Bildmuster (9) abgelesen wurde, auszuwerfen, oder dass
j. der wenigstens eine Handlungsschritt beinhaltet, die Bildsignale des abgelesenen Bildmusters (9) zu speichern und/oder eine durch die Steuerungsvorrichtung (10) ermittelte Information über die Mikrotomklinge (6) zu speichern.

6. Mikrotom (1) nach einem der Ansprüche 1 bis 5, **dadurch gekennzeichnet, dass**
a. die Steuerungsvorrichtung (10) aufgrund der Bildsignale ermittelt, ob die Mikrotomklinge (6) mit dem Mikrotom (1) verwendbar ist oder nicht, und/oder dass
b. eine Zuordnung von unterschiedlichen Bildmustern (9) zu der Information, ob eine Mikrotomklinge (6) mit dem Mikrotom (1) verwendbar ist oder nicht, in einer Speichervorrichtung (17) der Steuerungsvorrichtung (10) abgelegt ist.

7. Mikrotom (1) nach einem der Ansprüche 4 bis 6, **dadurch gekennzeichnet, dass**
a. die Steuerungsvorrichtung (10) zum Auswerten der empfangenen Bildsignale die von der optischen Lesevorrichtung (8) empfangenen Bildsignale mit den Bildsignalen wenigstens eines Referenzbildmusters vergleicht, und/oder dass
b. eine Speichervorrichtung vorhanden ist, in der Bildsignale wenigstens eines Referenzbildmusters gespeichert sind oder speicherbar sind.

8. Mikrotom (1) nach einem der Ansprüche 4 bis 7, **dadurch gekennzeichnet, dass** die Steuerungsvorrichtung (10) in Abhängigkeit von den Bildsignalen des abgelesenen Bildmusters (9) wenigstens einen einzustellenden Schneidparameter festlegt.

9. Mikrotom (1) nach einem der Ansprüche 1 bis 8, **dadurch gekennzeichnet, dass** die optische Lesevorrichtung (8) dazu ausgebildet und angeordnet ist, ein als Barcode oder als QR-Code oder als Logo oder als Schriftzug oder als fortlaufende Nummerierung ausgebildetes Bildmuster (9) abzulesen.

10. Mikrotom (1) nach einem der Ansprüche 1 bis 9, **dadurch gekennzeichnet, dass** das Mikrotom (1) als Schlittenmikrotom oder als Rotationsmikrotom oder als Vibratom oder als Sägemikrotom ausgebildet ist.

11. Mikrotom (1) nach einem der Ansprüche 1 bis 10, **dadurch gekennzeichnet, dass**
a. die Steuerungsvorrichtung (10) fortlaufend ein Protokoll führt, oder dass
b. die Steuerungsvorrichtung (10) fortlaufend ein Protokoll führt und, insbesondere fortlaufend, Protokolldaten in einem Speicher ablegt und/oder über eine Schnittstelle ausgibt und/oder auf einer Ausgabevorrichtung anzeigt, oder dass
c. die Steuerungsvorrichtung (10) fortlaufend ein Protokoll führt und, insbesondere fortlaufend, Protokolldaten in einem Speicher ablegt und/oder über eine Schnittstelle ausgibt und/oder auf einer Ausgabevorrichtung anzeigt, wobei die Protokolldaten die Handlungsschritte und/oder die Benutzereingaben und/oder die Daten der Leseeinrichtung (8) und/oder die Daten der Steuerungsvorrichtung (10) und/oder Ortsdaten und/oder Zeitdaten umfassen.

12. Histologie-Laborsystem, das ein Mikrotom (1) nach einem der Ansprüche 1 bis 11 sowie einen übergeordneten Computer aufweist, der Protokolldaten von dem Mikrotom (1) empfängt.

13. Histologie-Laborsystem nach Anspruch 12, **dadurch gekennzeichnet, dass**
a. der übergeordnete Computer weitere Protokolldaten anderer Mikrotome und/oder anderer Laborgeräte empfängt, oder dass
b. der übergeordnete Computer weitere Protokolldaten anderer Mikrotome und/oder anderer Laborgeräte empfängt und jeweils die Protokolldaten und die weiteren Protokolldaten, die dieselbe Probe betreffen, einander zugeordnet und gemeinsam abspeichert und/oder weiterverarbeitet.

14. Verfahren zum Betreiben eines Mikrotoms, **dadurch gekennzeichnet, dass** ein auf eine Mikrotomklinge aufgebrachtes, optisch ablesbares Bildmuster mittels einer optischen Lesevorrichtung abgelesen und analoge oder digitale Bildsignale bezüglich des abgelesenen Bildmusters erzeugt werden, die an eine Steuerungsvorrichtung des Mikrotoms übergeben werden.

## Claims

1. Microtome (1) having a microtome blade (6) and having a cutting device (2) for cutting histological samples (3) into thin histological slides, wherein an optically readable image pattern (9) is applied to the microtome blade (6), and wherein an optical reading device (8) is present which reads the image pattern (9) from the microtome blade (6), generates analogue or digital image signals in relation to the read image pattern (9) and transmits the image signals to a control device (10) of the microtome (1).

2. Microtome (1) according to Claim 1, **characterized in that**
a. the microtome (1) has a microtome blade holder (7) in which the microtome blade (6) is releasably fastened or able to be fastened in a cutting position, or **in that**
b. the microtome (1) has a microtome blade holder (7) in which the microtome blade (6) is releasably fastened or able to be fastened in a cutting position, wherein the optical reading device (8) is designed and arranged to read the image pattern (9) from the microtome blade (6) arranged in the microtome blade holder (7), or **in that**
c. the microtome (1) has a microtome blade holder (7) in which the microtome blade (6) is releasably fastened or able to be fastened in a cutting position, wherein the optical reading device (8) is integrated into the microtome blade holder (7), or in that
d. the microtome (1) has a microtome blade holder (7) in which the microtome blade (6) is releasably fastened or able to be fastened in a cutting position, wherein the optical reading device (8) is integrated into the microtome blade holder (7) and is designed and arranged to read the image pattern (9) from the microtome blade (6) arranged in the microtome blade holder (7).

3. Microtome (1) according to Claim 1 or 2, **characterized in that**
a. the microtome (1) has a microtome blade storage container (19), or **in that**
b. the microtome (1) has a microtome blade storage container (19), wherein the optical reading device (8) is designed and arranged to read an image pattern (9) from a microtome blade (6) arranged in the microtome blade storage container (19), or **in that**
c. the microtome (1) has a microtome blade storage container (19) and a microtome blade changing device (18) that is designed to remove a microtome blade (6) from the microtome blade storage container (19) and to transport it to the microtome blade holder (7), or **in that**
d. the microtome (1) has a microtome blade storage container (19) and a microtome blade changing device (18) that is designed to remove a microtome blade (6) from the microtome blade storage container (19) and to transport it to the microtome blade holder (7), wherein the optical reading device (8) reads the image pattern (9) from a microtome blade (6) during transportation to the microtome blade holder (7), or **in that**
e. the microtome (1) has a microtome blade storage container (19) and a microtome blade changing device (18) that is designed to remove a microtome blade (6) from the microtome blade storage container (19) and to transport it to the microtome blade holder (7), wherein the optical reading device (8) is integrated into the microtome blade changing device (18) .

4. Microtome (1) according to one of Claims 1 to 3, **characterized in that** the control device (10) evaluates the received image signals and defines at least one action step on the basis of the evaluation result.

5. Microtome (1) according to Claim 4, **characterized in that**
a. the at least one action step comprises blocking the cutting device (2), or **in that**
b. the at least one action step comprises blocking or stopping a microtome blade change, or **in that**
c. the at least one action step comprises releasing the cutting device (2) for at least one cutting process, or **in that**
d. the at least one action step comprises requesting an input from a user, or **in that**
e. the at least one action step comprises requesting an input from a user, wherein the control device (10) evaluates the input and deletes an already defined action step and/or defines at least one further action step on the basis of the input, or in that
f. the at least one action step comprises requesting an input from a user, wherein the cutting device (2) is blocked until the input is made, or **in that**
g. the at least one action step comprises requesting an input from a user, wherein the control device (10) stops a microtome blade change until the input is made, or **in that**
h. the at least one action step comprises transmitting a message to a user, or **in that**
i. the at least one action step comprises evaluating the microtome blade (6) from which the image pattern (9) was read, or **in that**
j. the at least one action step comprises storing the image signals from the read image pattern (9) and/or storing information about the microtome blade (6) as determined by the control device (10).

6. Microtome (1) according to one of Claims 1 to 5, **characterized in that**
a. the control device (10) determines, based on the image signals, whether or not the microtome blade (6) is able to be used with the microtome (1), and/or in that
b. an assignment of different image patterns (9) to the information as to whether or not a microtome blade (6) is able to be used with the microtome (1) is stored in a storage device (17) of the control device (10).

7. Microtome (1) according to one of Claims 4 to 6, **characterized in that**
a. the control device (10), in order to evaluate the received image signals, compares the image signals received from the optical reading device (8) with the image signals from at least one reference image pattern, and/or **in that**
b. a storage device is present, in which storage device image signals from at least one reference image pattern are stored or able to be stored.

8. Microtome (1) according to one of Claims 4 to 7, **characterized in that** the control device (10) defines at least one cutting parameter to be set on the basis of the image signals from the read image pattern (9).

9. Microtome (1) according to one of Claims 1 to 8, **characterized in that** the optical reading device (8) is designed and arranged to read an image pattern (9) in the form of a barcode or a QR code or a logo or lettering or continuous numbering.

10. Microtome (1) according to one of Claims 1 to 9, **characterized in that** the microtome (1) is designed as a sliding microtome or as a rotating microtome or as a vibratome or as a saw microtome.

11. Microtome (1) according to one of Claims 1 to 10, **characterized in that**
a. the control device (10) continuously keeps records, or **in that**
b. the control device (10) continuously keeps records and, in particular continuously, stores record data in a memory and/or outputs them via an interface and/or displays them on an output device, or **in that**
c. the control device (10) continuously keeps records and, in particular continuously, stores record data in a memory and/or outputs them via an interface and/or displays them on an output device, wherein the record data comprise the action steps and/or the user inputs and/or the data from the reading device (8) and/or the data from the control device (10) and/or location data and/or time data.

12. Histological laboratory system, having a microtome (1) according to one of Claims 1 to 11 and a superordinate computer that receives record data from the microtome (1) .

13. Histological laboratory system according to Claim 12, **characterized in that**
a. the superordinate computer receives further record data from other microtomes and/or other laboratory devices, or **in that**
b. the superordinate computer receives further record data from other microtomes and/or other laboratory devices and the record data and the further record data each concern the same sample, are associated with one another and are jointly stored and/or further processed.

14. Method for operating a microtome, **characterized in that** an optically readable image pattern applied to a microtome blade is read by way of an optical reading device and analogue or digital image signals in relation to the read image pattern are generated and are transmitted to a control device of the microtome.

## Revendications

1. Microtome (1) comprenant une lame de microtome (6) et un dispositif de coupe (2) destiné à couper les échantillons histologiques (3) sous forme de minces préparations de coupe histologiques, un motif d'image lisible optiquement (9) étant appliqué sur la lame de microtome (6), et un dispositif de lecture optique (8) étant présent qui lit le motif d'image (9) sur la lame de microtome (6), génère des signaux d'image analogiques ou numériques relatifs au motif d'image lu (9) et transmet les signaux d'image à un dispositif de commande (10) du microtome (1).

2. Microtome (1) selon la revendication 1, **caractérisé en ce que**
a. le microtome (1) comporte un support de lame de microtome (7) dans lequel la lame de microtome (6) est ou peut être fixée de manière amovible dans une position de coupe, ou
b. le microtome (1) comporte un support de lame de microtome (7) dans lequel la lame de microtome (6) est ou peut être fixée de manière amovible dans une position de coupe, le dispositif de lecture optique (8) étant conçu et disposé pour lire le motif d'image (9) sur la lame de microtome (6) disposée dans le support de lame de microtome (7), ou
c. le microtome (1) comporte un support de lame de microtome (7) dans lequel la lame de microtome (6) est ou peut être fixée de manière amovible dans une position de coupe, le dispositif de lecture optique (8) étant intégré dans le support de lame de microtome (7), ou
d. le microtome (1) comporte un support de lame de microtome (7) dans lequel la lame de microtome (6) est ou peut être fixée de manière amovible dans une position de coupe, le dispositif de lecture optique (8) étant intégré dans le support de lame de microtome (7) et étant conçu et disposé pour lire le motif d'image (9) sur la lame de microtome (6) disposée dans le support de lame de microtome (7).

3. Microtome (1) selon la revendication 1 ou 2, **caractérisé en ce que**
a. le microtome (1) comporte un réservoir de lames de microtome (19), ou
b. le microtome (1) comporte un réservoir de lame de microtome (19), le dispositif de lecture optique (8) étant conçu et disposé pour lire un motif d'image (9) sur une lame de microtome (6) disposée dans le réservoir de lames de microtome (19), ou
c. le microtome (1) comporte un réservoir de lames de microtome (19) et un dispositif de changement de lame de microtome (18) qui est conçu pour retirer une lame de microtome (6) du réservoir de lames de microtome (19) et la transporter vers le support de lame de microtome (7), ou
d. le microtome (1) comporte un réservoir de lames de microtome (19) et un dispositif de changement de lame de microtome (18) qui est conçu pour retirer une lame de microtome (6) du réservoir de lames de microtome (19) et la transporter vers le support de lame de microtome (7), le dispositif de lecture optique (8) lisant le motif d'image (9) sur une lame de microtome (6) pendant le transport vers le support de lame de microtome (7), ou
e. le microtome (1) comporte un réservoir de lames de microtome (19) et un dispositif de changement de lame de microtome (18) qui est conçu pour retirer une lame de microtome (6) du réservoir de lames de microtome (19) et la transporter vers le support de lame de microtome (7), le dispositif de lecture optique (8) étant intégré dans le dispositif de changement de lame de microtome (18).

4. Microtome (1) selon l'une des revendications 1 à 3, **caractérisé en ce que** le dispositif de commande (10) évalue les signaux d'image reçus et définit au moins une étape d'action en fonction du résultat d'évaluation.

5. Microtome (1) selon la revendication 4, **caractérisé en ce que**
a. l'au moins une étape d'action comprend le blocage du dispositif de coupe (2), ou
b. ladite au moins une étape d'action comprend le blocage ou l'arrêt d'un changement de lame de microtome, ou
c. l'au moins une étape d'action comprend la libération du dispositif de coupe (2) en vue d'au moins une opération de coupe, ou
d. l'au moins une étape d'action comprend une demande auprès d'un utilisateur pour qu'il effectue une entrée, ou
e. l'au moins une étape d'action comprend une demande auprès d'un utilisateur pour qu'il effectue une entrée, le dispositif de commande (10) évaluant l'entrée et, en fonction de l'entrée, supprimant une étape d'action déjà définie et/ou définissant au moins une autre étape d'action, ou
f. l'au moins une étape d'action comprend une demande auprès d'un utilisateur pour qu'il effectue une entrée, le dispositif de coupe (2) étant bloqué jusqu'à l'arrivée de l'entrée, ou
g. l'au moins une étape d'action comprend une demande auprès d'un utilisateur pour qu'il effectue une entrée, le dispositif de commande (10) arrêtant un changement de lame de microtome jusqu'à l'arrivée de l'entrée, ou
h. l'au moins une étape d'action comprend la délivrance d'un message à un utilisateur, ou
i. l'au moins une étape d'action comprend l'éjection de la lame de microtome (6) sur laquelle le motif d'image (9) a été lu, ou
j. l'au moins une étape d'action comprend la mémorisation des signaux d'image du motif d'image (9) lu et/ou la mémorisation d'une information sur la lame de microtome (6) qui a été déterminée par le dispositif de commande (10).

6. Microtome (1) selon l'une des revendications 1 à 5, **caractérisé en ce que**
a. le dispositif de commande (10) détermine sur la base des signaux d'image si la lame de microtome (6) peut être utilisée ou non avec le microtome (1), et/ou
b. une association de différents motifs d'image (9) à l'information, indiquant si une lame de microtome (6) peut être utilisée avec le microtome (1), est stockée dans un dispositif de mémorisation (17) du dispositif de commande (10).

7. Microtome (1) selon l'une des revendications 4 à 6, **caractérisé en ce que**
a. pour évaluer les signaux d'image reçus, le dispositif de commande (10) compare les signaux d'image reçus du dispositif de lecture optique (8) aux signaux d'image d'au moins un motif d'image de référence, et/ou
b. un dispositif de mémorisation est présent dans lequel des signaux d'image d'au moins un motif d'image de référence sont stockés ou peuvent être stockés.

8. Microtome (1) selon l'une des revendications 4 à 7, **caractérisé en ce que** le dispositif de commande (10) définit au moins un paramètre de coupe à régler en fonction des signaux d'image du motif d'image (9) qui a été lu.

9. Microtome (1) selon l'une des revendications 1 à 8, **caractérisé en ce que** le dispositif de lecture optique (8) est conçu et disposé pour lire un motif d'image conçu comme un code-barres ou un QR-code ou comme un logo ou comme un lettrage ou comme une numérotation consécutive (9).

10. Microtome (1) selon l'une des revendications 1 à 9, **caractérisé en ce que** le microtome (1) est conçu comme un microtome à coulisse ou un microtome rotatif ou un vibratome ou un microtome à scie.

11. Microtome (1) selon l'une des revendications 1 à 10, **caractérisé en ce que**
a. le dispositif de commande (10) tient en permanence un journal, ou
b. le dispositif de commande (10) tient en permanence un journal et, en particulier, stocke en permanence des données de journal dans une mémoire et/ou les délivre par le biais d'une interface et/ou les affiche sur un dispositif de sortie, ou
c. le dispositif de commande (10) tient en permanence un journal et, en particulier, stocke en permanence des données de journal dans une mémoire et/ou les délivre par le biais d'une interface et/ou les affiche sur un dispositif de sortie, les données de journal comprenant les étapes d'action et/ou les entrées de l'utilisateur et/ou les données du dispositif de lecture (8) et/ou les données du dispositif de commande (10) et/ou des données de localisation et/ou des données de temps.

12. Système de laboratoire d'histologie qui comporte un microtome (1) selon l'une des revendications 1 à 11 et un ordinateur de niveau supérieur qui reçoit des données de journal du microtome (1).

13. Système de laboratoire d'histologie selon la revendication 12, **caractérisé en ce que**
a. l'ordinateur de niveau supérieur reçoit d'autres données de journal d'autres microtomes et/ou d'autres appareils de laboratoire, ou
b. l'ordinateur de niveau supérieur reçoit d'autres données de journal d'autres microtomes et/ou d'autres appareils de laboratoire et associe les données de journal et les autres données de journal concernant le même échantillon les unes aux autres et les stocke ensemble et/ou les traite ultérieurement.

14. Procédé de fonctionnement d'un microtome, **caractérisé en ce qu'**un motif d'image lisible optiquement appliqué sur une lame de microtome est lu au moyen d'un dispositif de lecture optique et des signaux d'image analogiques ou numériques relatifs au motif d'image lu sont générés qui sont transférés à un dispositif de commande du microtome.
